# EUROPEAN PATENT SPECIFICATION

(11) **EP 3 376 850 B1**
(45) Date of publication and mention of the grant of the patent: **30.12.2020**
(21) Application number: 16795382.7
(22) Date of filing: 16.11.2016
(51) Int. Cl.: A01F 25/20

(54) **IMPLEMENT FOR HANDLING ANIMAL FEEDSTUFFS**
ARBEITSGERÄT ZUR HANDHABUNG VON TIERFUTTER
OUTIL POUR MANIPULER DES ALIMENTS POUR ANIMAUX

(30) Priority: 16.11.2015 GB 201520198
(43) Date of publication of application: 26.09.2018
(73) Proprietor: William Taylor (Import/Export) Limited, Co Londonderry BT51 4NU (IE)
(72) Inventor: TAYLOR, William, Macosquin, Coleraine County Londonderry BT51 4NU (GB)
(74) Representative: FRKelly
(86) International application number: PCT/EP2016/077852
(87) International publication number: WO 2017/085121

(56) References cited:
- EP-A2- 2 732 691
- EP-A2- 2 826 359
- NL-C- 2 011 408
- US-A- 4 908 966

## Description

This invention relates to am improved vehicle for handling animal feedstuffs, including silage, and in particular to vehicle having an improved silage shear bucket implement that can handle a wide range of feedstuffs.

Silage shear buckets are used for cutting and removing a block of silage from a silage clamp for delivering the silage to animals. Silage shear buckets are typically mounted on an agricultural tractor, typically on a front loader provided thereon or optionally on a three point linkage on the rear of the tractor.

A typical known silage shear bucket comprises a lower jaw, comprising a flat blade extending forwardly from a substantially vertical rear wall, and an upper jaw, comprising a front wall and a pair of side walls. A cutting edge, typically comprises a row of teeth, is usually provided along a lower edge of the front wall of the upper jaw for biting into the silage. The shear bucket is able to enclose a block of material when the jaws are closed.

The upper jaw of the shear bucket is pivotally attached to the lower jaw to be movable relative to the lower jaw about a horizontally aligned pivot axis between an open configuration, in which the front wall of the upper jaw is spaced from the blade of the lower jaw, and a closed configuration, in which the jaws are closed to bite a block of silage from a silage clamp. The upper and lower jaws are typically pivotally moved with respect to each other by one or more double acting hydraulic rams extending between the upper and lower jaws.

In use, the shear bucket is driven into the silage with the jaw open until the blade of the lower jaw penetrates the silage. At this stage the upper jaw is in a raised position with the jaws in their open configuration. The hydraulic rams then close the upper jaw such that the front wall of the upper jaw cuts into the silage to separate a block of silage from the silage clamp. The shear bucket is then removed from the silage with the block of silage contained therein.

A problem with known silage shear buckets is that the lower jaw must be driven into the silage within a silo to fill the lower jaw before the upper jaw is closed to bite out a block of silage. Therefore it is not always easy to drive the lower jaw a sufficient distance into the silage. Also cutting horizontally aligned blocks of silage from a silage clamp leads to a reduced stepped profile in the remaining silage. NL2011408 discloses an implement for animal feedstuffs comprising grasping jaws adapted to be suspended from a boom or hoist to lift feedstuff between the jaws. Actuators are used to move teeth within each jaw between operative and inoperative positions.

EP 2 826 359 A2 discloses another implement for animal feedstuffs comprising gripper halves, which are pivotable with respect to each other between an open configuration and a closed configuration.

The purpose of this invention is to increase the efficiency of a shear grab implement when handling animal feed stuffs, including grains, silage, haylage, waste vegetables etc.

The present invention provides a vehicle for handling animal feedstuffs comprising an implement which is capable of cutting and transporting silage or the like in the conventional manner, in addition to being capable of carrying flowable material such as powder or granules. According to the present invention there is a vehicle having an implement for handling animal feedstuffs as claimed in claim 1.

In one embodiment the drive means comprise two or more double acting hydraulic rams.

Each jaw may comprise a rear wall, a front wall and a pair of opposing end walls to define, between them, an elongate trough shaped bucket. In a preferred embodiment the rear wall of each jaw may be pivotally mounted with respect to the front and end walls thereof to enable the rear wall to be moved independently of the front and end walls. Stop means may be provided to limit the movement of the rear wall of each jaw with respect to the front and side walls thereof. The stop means of each jaw may include at least one flexible linkage, such as a chain, extending between the rear wall and front wall of each jaw.

In a preferred embodiment, adjacent end walls of each jaw of the implement include apertures to allow material to enter the jaws when they are in their closed position.

Wear skids and/or wheels may be provided on the outer faces of one or both end walls and/or the front walls of the jaws of the implement to protect the jaws from damage as the jaws are slid along the ground.

Preferably the pivot axes of the jaws are arranged horizontally in alignment with a direction of movement of the vehicle in a second mode of operation, whereby the implement can be pushed into loose material with the jaws in their closed position such that material may enter the jaws through an open end of the jaws. One or more openings may be formed in an end of each jaw through which material may pass as the implement is pushed into said loose material.

The implement may be mounted on an end of a telescopic boom provided on the vehicle.

A vehicle for handling animal feedstuffs in accordance with an embodiment of the present invention will now be described, by way of example only, with reference to the accompanying drawings, in which :-
Figure 1 is a perspective view of a telescopic handler fitted with an implement for handling feedstuffs in accordance with an embodiment of the present invention;
Figure 2 is a front perspective view of the implement of Figure 1 with the jaws closed;
Figure 3 is a rear perspective view of the implement of Figure 1 with the jaws open;
Figure 4 is a front perspective view of the implement of Figure 1 with the jaws open;

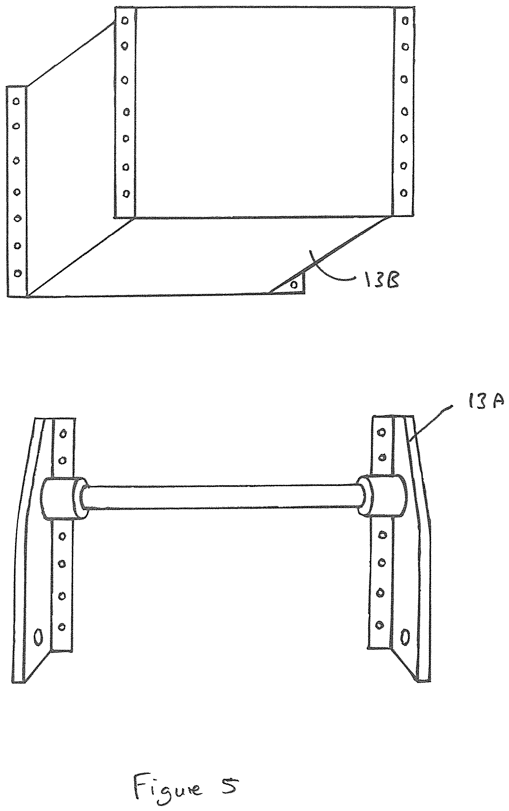

Figure 5 comprises perspective views of alternative mounting brackets;
Figure 6 is detailed view of the leading edge of one of the jaws;

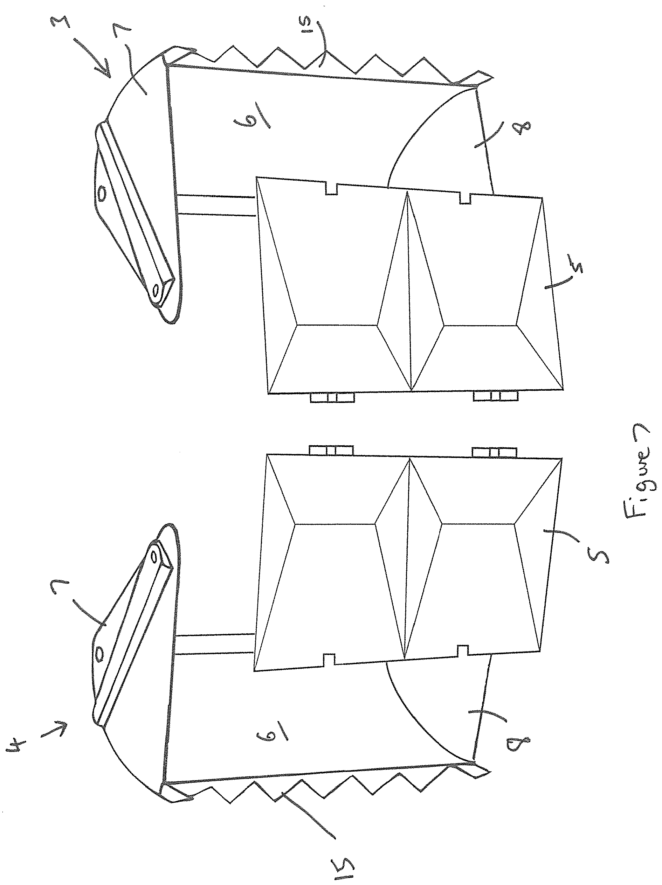

Figure 7 is an exploded view of the implement of Figure 1.

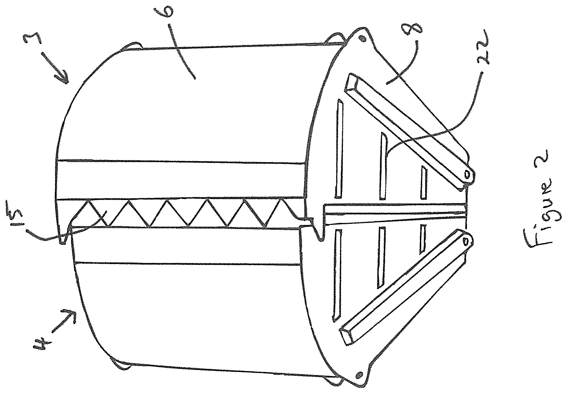

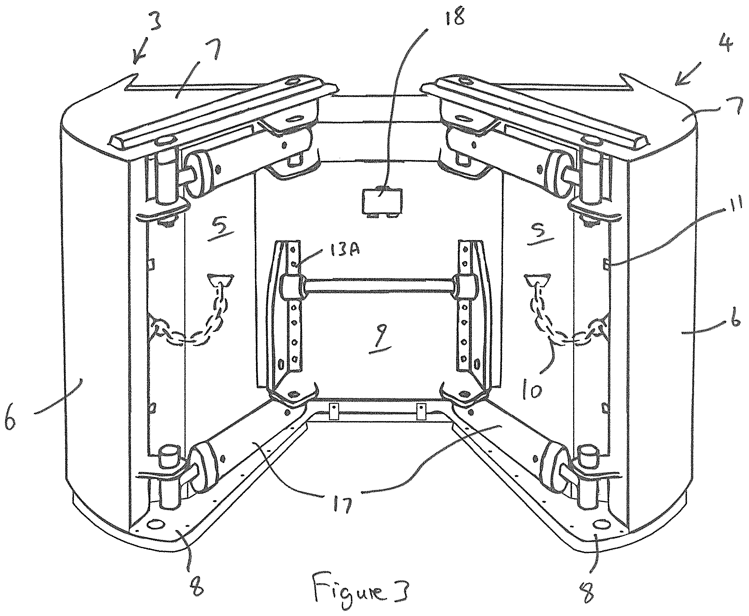

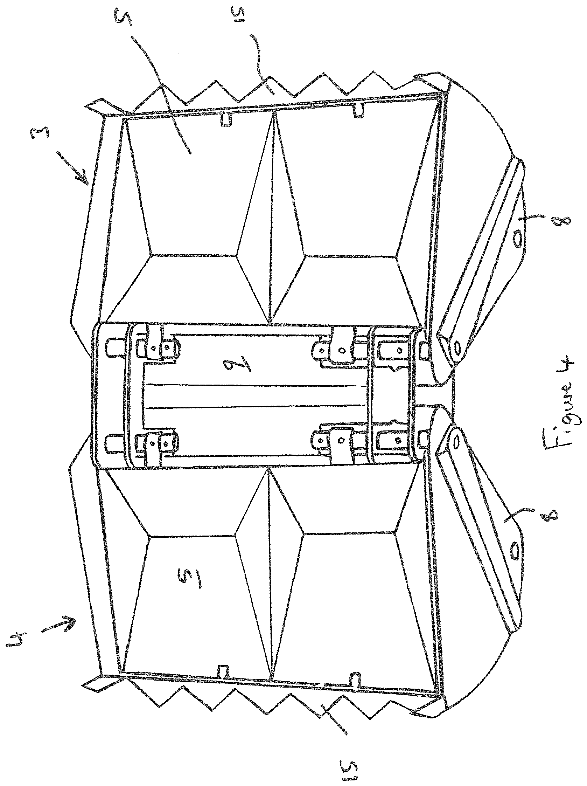

A vehicle 1 for handling animal feedstuffs in accordance with an embodiment of the present invention comprises an implement 2 having a pair of symmetrically arranged bucket shaped jaws 3,4 pivotally mounted for movement about parallel pivot axes, under the action of a suitable drive means, between an open position, as shown in Figures 3 and 4, wherein the jaws 3,4 are spaced apart from one another, and a closed position, as shown in Figure 2, wherein the jaws 3,4 interact to enclose a body of material therein. Each jaw 3,4 comprises a rear wall 5, a front wall 6 and opposed end walls 7,8 defining, between them, an elongate trough shaped bucket.

The implement 2 includes a central frame member or spine 9 mounted between the jaws 3,4 upon which spine 9 the jaws 3,4 are pivotally mounted about respective parallel pivot axes. An outer face of the central spine 9 defines a mounting surface by means of which the implement 2 is adapted to be mounted onto a carrying vehicle, for example by means of one or more intermediate attachment brackets 10 attachable to the central spine 9.

Preferably the rear wall 5 of each jaw is pivotally mounted on the spine 9 to be independently pivotably moveable with respect to the front wall 6 and end walls 7,8 of the respective jaw 3,4 such that the rear wall 5 can act as a push off plate as the jaws 3,4 are opened. Each end wall is coupled to the respective front wall via a linkage, such as a chain 10, such chain pulling taught as the jaws 3,4 are opened to pull the rear walls 5 away from each other. Further stop means or abutments 11 are provided on each front wall to engage the respective rear wall 5 as the jaws 3,4 are closed, whereby the chains 10 and abutments 11 constrain the limits of movement of each rear wall 5 with respect to the front wall 6 of the respective jaw 3,4. It is envisaged that the rear walls 5 may be provided with drive means, such as double acting rams, for moving the rear walls 5 independently of the front walls 6 of each jaw 3,4.

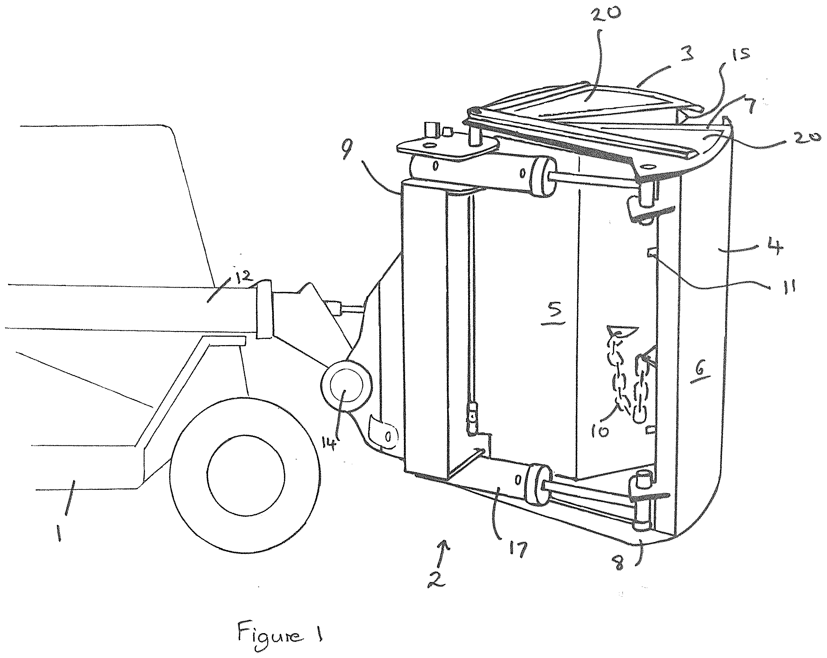

Figure 1 illustrates the implement 2 in a working position attached to a distal end of an arm or boom 12 of a farm handler/telescopic handler 1. The implement 2 may also be mounted on a tractor front loader or the three point linkage of a tractor, or onto a forklift mast or self propelled forklift. As illustrated by Figures 3A and 3B, alternative interchangeable or combinable attachment brackets 13A,13B may be provided to enable the implement 2 to be adapted to be mounted on different vehicles or to different coupling arrangements.

When mounted on an arm or boom 12 of a telescopic handler 1, the implement 2 may mounted on the arm or boom 12 via a pivotable mounting 14 enabling the implement to be pivoted between a vertical orientation, as shown in Figure 1, for use in a first mode of operation, and a forwardly facing horizontal orientation (not shown) for use in a second mode of operation.

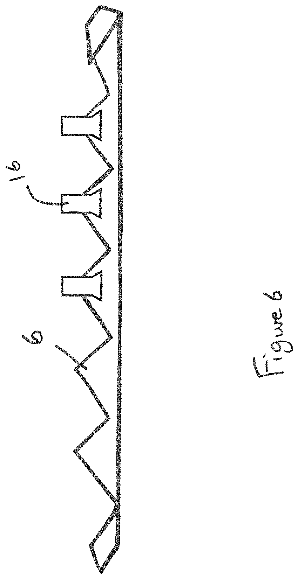

The leading edges 15 of the front 6 wall (and preferably also the end walls 7,8) of each jaw 3,4 are preferably sharpened and/or serrated to cut through material, such as silage to allow the jaws 3,4 to cut through such material as the jaws are closed. Such sharpened edges may be in the form of straight edges, particularly in respect of the end walls 7,8 of each jaw 2,3, or serrated edges, particularly in the case of the front edge 6 of the front wall 6 of each jaw 2,3. Additional teeth or cutting projections 16 (as shown in Figure 6) may be attached to the front edge 15 of each jaw 3,4, for example by welding.

The two jaws 3,4, when open, can be placed against a silo face of a silage clamp, either vertically (as shown in Figure 1) or horizontally (the first being preferable minimising rain damage). When the jaws 3,4 are closed, a full block of silage will be cut from the silo every time, without requiring the jaws to be forced into the silage prior to closing as required with known silage shear buckets. The leading edges 15 of the two jaws 3,4 may meet or more preferably overlap with one another when the jaws are closed. The ends walls 7,8 of the jaws may be arranged to overlap one another as the jaws 3,4 are closed.

By mounting the implement 2 vertically, as shown in Figure 1, with the pivot axes of the jaws 3,4 extending vertically, the implement 2 may cut vertical columns of silage from the silo, making it easier to re-cover the silage and reducing rain damage when compared to traditional methods of cutting horizontally aligned blocks of silage.

The drive means of the jaws 3,4 of the implement 2 may comprise two or more double acting hydraulic single stage rams 17 extending between each respective jaw 3,4 and the central spine 9. In order to have sufficient travel, the hydraulic rams 12 may each comprise two or more stages. Alternatively, a linkage or lever system (not shown) may be used in conjunction with single stage double acting hydraulic rams to provide sufficient travel. Hydraulic power for the rams 12 may be provided from the handler or tractor hydraulics.

A flow control valve 18 may be provided for ensuring that the jaws 3,4 are closed at the same rate, in synchronisation with one another. Alternatively the jaws 3,4 may be mechanically linked, for example by gearing, so that they close together at the same rate, in synchronisation with one another.

As shown in Figure 1, the uppermost ends 7 of each jaw 3,4 may optionally incorporate openings 20 therein, whereby loose material may pass into or out of the jaws via such openings 20 with the jaws 3,4 remaining in their closed position in engagement with one another. Thus the implement 2 can be loaded with loose grains and/or feed mixes by driving the implement 2 end first into gains/feed mixes with the open ends of the closed jaws 3,4 foremost to allow material to enter the implement via said openings 14 as the implement 2 is pushed into the material.

As best shown in Figure 2, wear skids 22 may be proved on the outer surface of at least the lower end 8 of each jaw. Such wear skids 22 may be replaceable, for example by being bolted onto the lower ends 8 of the jaws 3,4. Further wear skids and/or ball wheels (not shown) may be provided on the outer faces of the front walls 6 of the jaws 3,4 of the implement 2 adjacent the forward cutting edges 15 thereof to protect the jaws 3,4 from damage as the jaws 3,4 when the implement rests on the ground and/or when the jaws 3,4 are slid along the ground, particularly when loading the implement 2 with loose feedstuffs via the openings 20 of the implement 2, as described above.

It will be immediately understood by a person skilled in the art that the configuration of the above described implement is merely one preferred arrangement which may be utilised in order to handle different animals feedstuffs, including silage and granular material, and that many variations on the basic principle exist. As such, the invention is not limited to the embodiment(s) described herein but can be amended or modified without departing from the scope of the present invention as defined in the appended claims.

## Claims

1. A vehicle for handling animal feedstuffs comprising an implement (2) mounted on the vehicle, said implement (2) comprising a pair of opposed bucket shaped jaws (3,4) pivotally mounted for movement between an open position, wherein the jaws (3,4) are spaced apart from one another, and a closed position, wherein the jaws (3,4) interact to enclose a body of material therein, drive means (17) being provided for moving the jaws (3,4) between said open and closed positions, each jaw (3,4) comprising a front wall (6) with a cutting edge along a front leading edge (15) thereof and wherein the leading edges (15) of the two jaws (3,4) meet or overlap with one another when the jaws are closed, a central mounting member (9) being provided between said pair of jaws (3,4) and to which the jaws (3,4) are connected, **characterised in that** the pivot axes of the jaws (3,4) are arranged vertically in a first mode of operation, said jaws (3,4) being symmetrically arranged on either side of the central mounting member (9), said drive means (17) acting between said central mounting member (9) and each of said jaws (3,4).

2. A vehicle as claimed in claim 1, wherein said drive means (17) comprise two or more double acting hydraulic rams.

3. A vehicle as claimed in any preceding claim, wherein each jaw (3,4) comprises a rear wall (5), said front wall (6) and a pair of opposing end walls (7,8) to define, between them, an elongate trough shaped bucket.

4. A vehicle as claimed in claim 3, wherein the rear wall (5) of each jaw (3,4) is pivotally mounted with respect to the front and end walls thereof to enable the rear wall to be moved independently of the front and end walls.

5. A vehicle as claimed in claim 4, wherein stop means (11) are provided to limit the movement of the rear wall (5) of each jaw (2,3) with respect to the front and side walls thereof.

6. A vehicle as claimed in claim 5, wherein said stop means of each jaw includes at least one flexible linkage (10) extending between the rear wall (5) and front wall (6) of each jaw.

7. A vehicle as claimed in any preceding claim, wherein the pivot axes of the jaws (3,4) are arranged horizontally in alignment with a direction of movement of the vehicle in a second mode of operation, whereby the implement (2) can be pushed into loose material with the jaws in their closed position such that material may enter the jaws through an open end of the jaws

8. A vehicle as claimed in claim 7, wherein one or more openings (20) are formed in an end of each jaw (3,4) through which material may pass as the implement (2) is pushed into said loose material.

## Patentansprüche

1. Fahrzeug zum Verladen von Tierfutter mit einem an dem Fahrzeug befestigten Arbeitsgerät (2), wobei das Arbeitsgerät (2) ein Paar sich gegenüberliegende, schaufelförmige Backen (3, 4) umfasst, die für eine Bewegung zwischen einer offenen Position, in der sich die Backen (3, 4) in einem Abstand zueinander befinden, und einer geschlossenen Position, in der die Backen (3, 4) so zusammenwirken, dass sie eine Materialmasse darin umschließen, schwenkbar befestigt sind, wobei Antriebsmittel (17) zum Bewegen der Backen (3, 4) zwischen der offenen und der geschlossenen Position vorgesehen sind, wobei jede Backe (3, 4) eine Vorderwand (6) mit einer Schaufelschneide entlang einer Vorderkante (15) davon umfasst und die Vorderkanten (15) der beiden Backen (3, 4) zusammentreffen oder sich überlappen, wenn die Backen geschlossen sind, wobei ein mittiges Montageelement (9) zwischen den beiden Backen (3, 4) vorgesehen ist, mit dem die Backen (3, 4) verbunden sind, **dadurch gekennzeichnet, dass** die Schwenkachsen der Backen (3, 4) in einem ersten Betriebsmodus vertikal angeordnet sind, wobei die Backen (3, 4) zu beiden Seiten des mittigen Montageelements (9) symmetrisch angeordnet sind, wobei die Antriebsmittel (17) zwischen dem mittigen Montageelement (9) und jeder der Backen (3, 4) wirken.

2. Fahrzeug nach Anspruch 1, wobei die Antriebsmittel (17) zwei oder mehr doppeltwirkende Hydraulikzylinder umfassen.

3. Fahrzeug nach einem der vorherigen Ansprüche, wobei jede Backe (3, 4) eine Rückwand (5), die Vorderwand (6) und ein Paar sich gegenüberliegende Stirnwände (7, 8) umfasst, die zwischen sich eine längliche, trogförmige Schaufel definieren.

4. Fahrzeug nach Anspruch 3, wobei die Rückwand (5) jeder Backe (3, 4) in Bezug auf die Vorderwand und die Stirnwände davon schwenkbar befestigt ist, damit sich die Rückwand unabhängig von der Vorderwand und den Stirnwänden bewegen lässt.

5. Fahrzeug nach Anspruch 4, wobei Anschlagmittel (11) vorgesehen sind, die die Bewegung der Rückwand (5) jeder Backe (2, 3) in Bezug auf die Vorderwand und die Stirnwände davon einschränken.

6. Fahrzeug nach Anspruch 5, wobei die Anschlagmittel jeder Backe mindestens ein flexibles Gestänge (10) aufweisen, das sich zwischen der Rückwand (5) und der Vorderwand (6) jeder Backe erstreckt.

7. Fahrzeug nach einem der vorherigen Ansprüche, wobei die Schwenkachsen der Backen (3, 4) in einem zweiten Betriebsmodus in Übereinstimmung mit einer Bewegungsrichtung des Fahrzeugs horizontal angeordnet sind, wodurch das Arbeitsgerät (2) mit den Backen in ihrer geschlossenen Position in loses Material geschoben werden kann, so dass durch ein offenes Ende der Backen Material in die Backen hineintreten kann.

8. Fahrzeug nach Anspruch 7, wobei in einem Ende jeder Backe (3, 4) eine oder mehrere Öffnungen (20) ausgebildet sind, durch die Material hindurchtreten kann, wenn das Arbeitsgerät (2) in das lose Material geschoben wird.

## Revendications

1. Véhicule servant à manipuler des aliments pour animaux comportant un outil (2) monté sur le véhicule, ledit outil (2) comportant une paire de mâchoires opposées en forme de godet (3, 4) montées de manière pivotante à des fins de mouvement entre une position ouverte, dans laquelle les mâchoires (3, 4) sont espacées l'une de l'autre, et une position fermée, dans laquelle les mâchoires (3, 4) agissent mutuellement pour renfermer un corps de matière dans celles-ci, des moyens d'entraînement (17) étant mis en œuvre à des fins de déplacement des mâchoires (3, 4) entre lesdites positions ouverte et fermée, chaque mâchoire (3, 4) comportant une paroi avant (6) avec un bord coupant le long d'un bord d'attaque avant (15) de celle-ci et dans lequel les bords d'attaque (15) des deux mâchoires (3, 4) se retrouvent ou se chevauchent l'un par rapport à l'autre quand les mâchoires sont fermées, un élément de montage central (9) étant mis en œuvre entre ladite paire de mâchoires (3, 4) et auquel les mâchoires (3, 4) sont raccordées, **caractérisé en ce que** les axes de pivot des mâchoires (3, 4) sont agencés à la verticale dans un premier mode de fonctionnement, lesdites mâchoires (3, 4) étant agencées de manière symétrique d'un côté et de l'autre de l'élément de montage central (9), lesdits moyens d'entraînement (17) agissant entre ledit élément de montage central (9) et chacune desdites mâchoires (3, 4).

2. Véhicule selon la revendication 1, dans lequel lesdits moyens d'entraînement (17) comportent deux vérins hydrauliques à double effet ou plus.

3. Véhicule selon l'une quelconque des revendications précédentes, dans lequel chaque mâchoire (3, 4) comporte une paroi arrière (5), ladite paroi avant (6) et une paire de parois d'extrémité opposées (7, 8) servant à définir, entre elles, un godet allongé en forme d'auge.

4. Véhicule selon la revendication 3, dans lequel la paroi arrière (5) de chaque mâchoire (3, 4) est montée de manière pivotante par rapport aux parois avant et d'extrémité de celle-ci pour permettre à la paroi arrière d'être déplacée indépendamment des parois avant et d'extrémité.

5. Véhicule selon la revendication 4, dans lequel des moyens d'arrêt (11) sont mis en œuvre pour limiter le mouvement de la paroi arrière (5) de chaque mâchoire (2, 3) par rapport aux parois avant et latérales de celle-ci.

6. Véhicule selon la revendication 5, dans lequel ledit moyen d'arrêt de chaque mâchoire comprend au moins une liaison flexible (10) s'étendant entre la paroi arrière (5) et la paroi avant (6) de chaque mâchoire.

7. Véhicule selon l'une quelconque des revendications précédentes, dans lequel les axes de pivot des mâchoires (3, 4) sont agencés à l'horizontale de manière alignée dans un sens du mouvement du véhicule dans un deuxième mode de fonctionnement, ce par quoi l'outil (2) peut être poussé jusque dans la matière en vrac avec les mâchoires dans leur position fermée de telle sorte que la matière peut entrer dans les mâchoires par une extrémité ouverte des mâchoires.

8. Véhicule selon la revendication 7, dans lequel une ou plusieurs ouvertures (20) sont formées dans une extrémité de chaque mâchoire (3, 4) au travers desquelles de la matière peut passer au fur et à mesure que l'outil (2) est poussé jusque dans ladite matière en vrac.
